(19) Europäisches Patentamt
European Patent Office
Office européen des brevets

(11) **EP 3 466 572 A1**

(12) **EUROPEAN PATENT APPLICATION**
published in accordance with Art. 153(4) EPC

(43) Date of publication:
**10.04.2019 Bulletin 2019/15**

(51) Int Cl.:
***B23B 1/00*** *(2006.01)*    ***B29C 33/38*** *(2006.01)*

(21) Application number: **17810204.2**

(22) Date of filing: **01.06.2017**

(86) International application number:
**PCT/JP2017/020509**

(87) International publication number:
**WO 2017/213026 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.06.2016   JP 2016113065**

(71) Applicants:
- **National University Corporation Nagoya University**
  **Nagoya-shi, Aichi 464-8601 (JP)**
- **Yamagata Prefectural Government**
  **Yamagata-shi, Yamagata 990-8570 (JP)**
- **Suga Zoukei Kogyo Inc.**
  **Yaizu-shi, Shizuoka 425-0085 (JP)**
- **Imuzak Inc.**
  **Yamagata-shi, Yamagata 990-2481 (JP)**

(72) Inventors:
- **SHAMOTO Eiji**
  **Nagoya-shi**
  **Aichi 464-8601 (JP)**
- **SAITO Hiroshi**
  **Yamagata-shi**
  **Yamagata 990-2473 (JP)**
- **KOBAYASHI Tsuneyuki**
  **Yamagata-shi**
  **Yamagata 990-2473 (JP)**
- **MOCHIZUKI Manabu**
  **Yaizu-shi**
  **Shizuoka 425-0085 (JP)**
- **SAWAMURA Kazumi**
  **Yamagata-shi**
  **Yamagata 990-2481 (JP)**

(74) Representative: **TBK**
  **Bavariaring 4-6**
  **80336 München (DE)**

(54) **MICROMACHINING METHOD, DIE MANUFACTURING METHOD, AND MICROMACHINING APPARATUS**

(57)    [Object] To provide a micromachining method, a die manufacturing method, and a micromachining apparatus which can perform accurate micromachining on a surface of a workpiece at high speed.

[Means for Solution] A micromachining apparatus 100 having a cutting tool 110 and an vibration unit 120 for vibrating the cutting tool 110 in a first direction K1 is used. The angle θ formed between an average cutting direction J1 of the cutting tool 110 and the first direction K1 is set to fall within a range of 20° to 120°. Recesses and protrusions are formed on a surface of a workpiece WP1 as a result of machining by the cutting tool 110 which is vibrating in the first direction K1.

FIG. 1

## Description

TECHNICAL FIELD

The technique of the present specification relates to a micromachining method, a die manufacturing method, and a micromachining apparatus which are adapted to form fine recesses and protrusions on a surface of a workpiece.

BACKGROUND ART

An ultrafine surface structure can be applied to (1) a wettability control technique, (2) an anti-reflection technique, and (3) a friction reduction technique. Namely, a water repellent part, an anti-reflection part, or a sliding part can be manufactured by forming fine recesses and protrusions on a surface of a material.

For example, Patent Document 1 discloses a technique of forming a thin film on a substrate, forming island-shaped fine particles of metal on the thin film, and etching regions where the island-shaped fine particles are not present by using a reactive gas and using the island-shaped fine particles as a mask (paragraphs [0023] to [0026], [0030] to [0034], and FIG. 1 of Patent Document 1).

PRIOR ART DOCUMENT

PATENT DOCUMENT

Patent Document 1:
Japanese Patent Application Laid-Open (*kokai*) No. 2008-143162

SUMMARY OF THE INVENTION

PROBLEM TO BE SOLVED BY THE INVENTION

However, the technique of Patent Document 1 has the following problems. As shown in FIG. 2(b) of Patent Document 1, the particle sizes of the island-shaped fine particles are non-uniform. Moreover, the sizes of gaps between fine particles may also be non-uniform. Therefore, in some case, control of fine recesses and protrusions may be difficult. This may result in production of products which fail to exhibit the desired performance. Namely, the yield of products is not very high.

In view of the above, there has been developed a technique of forming periodic grooves by using a cutting tool. However, in this case, in general, the grooves are formed on a groove-by-groove basis. Therefore, a very large number of man hours is needed for formation of fine recesses and protrusions.

The technique disclosed in the present specification has been accomplished so as to solve the above-described problem of the conventional technique. Its object is to provide a micromachining method, a die manufacturing method, and a micromachining apparatus which can perform accurate micromachining on a surface of a workpiece at high speed.

MEANS FOR SOLVING THE PROBLEM

A micromachining method according to a first aspect uses a machining apparatus comprising a cutting tool and an ultrasonic vibration unit for vibrating the cutting tool in a first direction. Also, the angle formed between an average cutting direction of the cutting tool and the first direction is set to fall within a range of 20° to 120°. Recesses and protrusions are formed on a surface of a workpiece as a result of machining by the cutting tool which is vibrating.

This micromachining method can form regular recesses and protrusions on the surface of the workpiece. Also, the speed of machining is sufficiently high. Therefore, a water repellent part, an anti-reflection part, a sliding part, etc. can be manufactured properly.

EFFECTS OF THE INVENTION

In the present specification, there are provided a micromachining method, a die manufacturing method, and a micromachining apparatus which can perform accurate micromachining on a surface of a workpiece at high speed.

BRIEF DESCRIPTION OF THE DRAWINGS

[FIG. 1] View schematically showing the structure of a micromachining apparatus according to a first embodiment.

[FIG. 2] View showing the relation between a cutting tool and an vibration direction (first direction K1).

[FIG. 3] First view showing the relation between the cutting tool and a surface of a workpiece.

[FIG. 4] Second view showing the relation between the cutting tool and a surface of a workpiece.

[FIG. 5] View showing the case where a surface of a workpiece is machined by the cutting tool in one direction.

[FIG. 6] First view showing a cutting tool of a micromachining apparatus according to a modification of the first embodiment.

[FIG. 7] Second view showing a cutting tool of a micromachining apparatus according to another modification of the first embodiment.

[FIG. 8] Photomicrograph showing the surface of a workpiece after being machined.

[FIG. 9] Photograph showing the surface of the workpiece after being machined.

MODES FOR CARRYING OUT THE INVENTION

A specific embodiment will now be described with reference to the drawings, with a micromachining method, a die manufacturing method, and a micromachining apparatus being used as examples.

(First embodiment)

1. Micromachining apparatus

1-1. Basic structure of micromachining apparatus

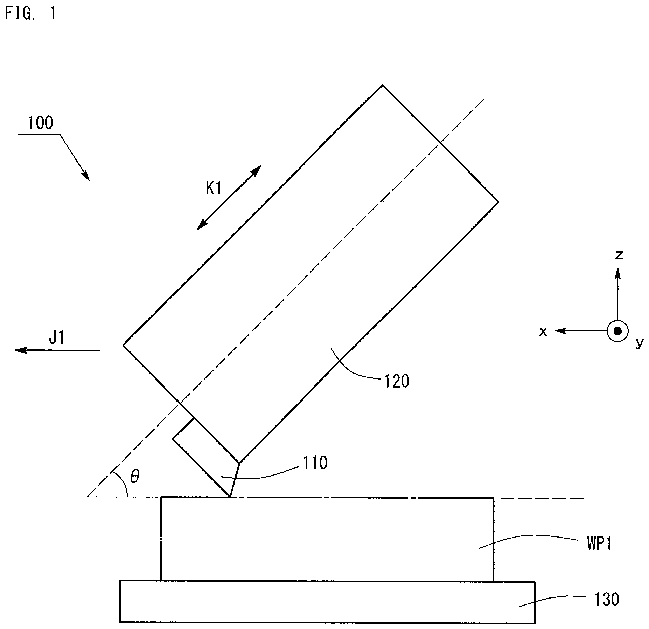

FIG. 1 is a view schematically showing the structure of a micromachining apparatus 100 of the present embodiment. As shown in FIG. 1, the micromachining apparatus 100 includes a cutting tool 110, an vibration unit 120, and a table 130. The micromachining apparatus 100 machines a workpiece WP1 in an average cutting direction J1 while vibrating the cutting tool 110 in a first direction K1 by using the vibration unit 120.

The average cutting direction J1 is a direction in which the average position of the vibrating cutting tool 110 moves with respect to the workpiece WP1. The average position of the vibrating cutting tool 110 is the center of the amplitude of vibration of the cutting tool 110. As will be described later, when the first direction (vibration direction) K1 is projected on the workpiece WP1, the projected first direction K1 is parallel to the average cutting direction J1.

The cutting tool 110 forms fine recesses and protrusions on a surface of the workpiece WP1. For example, the cutting tool 110 is a diamond cutter. The width of the cutting tool 110 is, for example, 20 $\mu$m to 2,000 $\mu$m. The width of the cutting tool 110 refers to the cutting edge width of a portion of the cutting tool 110 which takes part in actual cutting. For example, in the case where the width of the cutting tool 110 is 50 $\mu$m, one groove having a width of 50 $\mu$m or less is formed on the workpiece WP1 as a result of one cycle of vibration. The width of the cutting tool 110 is merely an example, and the cutting tool 110 may have a width which falls outside the above-described range.

The vibration unit 120 is an ultrasonic vibration unit for vibrating the cutting tool 110 in the first direction K1. As shown in FIG. 1, the vibration unit 120 reciprocates the cutting tool 110 in the first direction K1. Namely, the vibration unit 120 oscillates in the longitudinal direction. For example, the vibration unit 120 is a bolt-clamped Langevin-type transducer (BLT). The vibration unit 120 may be a horn for amplitude expansion which is joined to the BLT. The vibration unit 120 may be any of other types of vibration apparatuses.

The table 130 transports the workpiece WP1 when the workpiece WP1 is machined by the cutting tool 110. The table 130 moves the workpiece WP1 in a direction opposite the average cutting direction J1. As a result, the workpiece WP1 is machined gradually by the cutting tool 110 in the average cutting direction J1.

1-2. Interrelation of members

Here, for convenience of description, the average cutting direction J1 is defined as a positive direction along the x axis. In actuality, since the average position of the vibration unit 120 is fixed to the apparatus, the workpiece WP1 is transported in a negative direction along the x axis. In the present embodiment, when the direction of the cutting edge width of the cutting tool 110 is projected on the x-y plane, the direction of the cutting edge width of the cutting tool 110 projected on the x-y plane is parallel to the direction of the y axis; i.e., the y-axis direction. In the present embodiment, the first direction K1 is in the x-z plane. Namely, when the first direction K1 is projected on the x-y plane, the first direction K1 projected on the x-y plane is parallel to the direction of the x-axis; i.e., the x-axis direction (the average cutting direction J1).

As shown in FIG. 1, the average cutting direction J1 of the cutting tool 110 intersects with the first direction (vibration direction) K1 at an angle $\theta$. Namely, the angle formed between the first direction K1 and the x-axis direction is θ. The angle formed between the first direction K1 and the direction of the z axis (i.e., the z-axis direction) is 90° - θ. Both the average cutting direction J1 and the first direction K1 are located in the x-z plane.

In the micromachining apparatus 100, the angle θ formed between the average cutting direction J1 of the cutting tool 110 and the first direction K1 is 20° to 120°. Preferably, the angle θ is 35° to 85°. More preferably, the angle θ is 45° to 70°.

2. Machining method

Next, a method of machining a workpiece by using the micromachining apparatus 100 will be described.

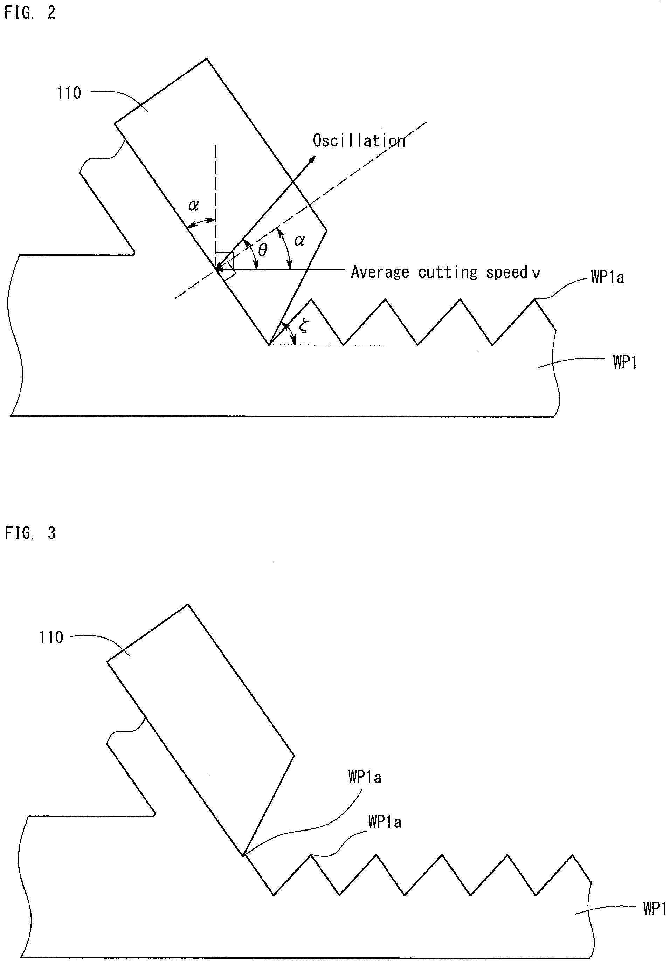

FIG. 2 is a view showing the relation between the cutting tool 110 and its vibration direction. The average cutting speed of the micromachining apparatus 100 satisfies the following expression:

$$v \cdot \cos\alpha \ < \ 2\pi af \cdot \cos(\theta+\alpha) \qquad (1)$$

where

v: the average cutting speed
a: the half amplitude of ultrasonic vibration
f: the frequency of ultrasonic vibration
θ: the angle formed between the average cutting direction of the cutting tool and the first direction
α: the rake angle of the cutting tool as viewed in a plane including the average cutting direction of the cutting tool and the first direction (when the rake angle is positive, the cutting edge is sharp, and when the rake angle is negative, the cutting edge is dull).

Notably, the rake angle α in FIG. 2 is negative.

Also, the average cutting speed satisfies the following expression:

$$\lambda \ = \ v/f \qquad (2)$$

where λ: the pitch of recesses and protrusions. Here, the average cutting speed refers to the speed at which the center of the amplitude of vibration of the cutting tool 110 moves.

It is desired that the half amplitude of the vibration unit 120 is sufficiently large so that the expression (1) is satisfied. It is preferred that the vibration unit 120 has a high vibration frequency within a range within which no problem occurs in the apparatus. This is because, as shown by the expression (2), the higher the vibration frequency of the vibration unit 120, the higher the settable average cutting speed. Preferably, the vibration frequency of the vibration unit 120 falls with the range of, for example, 100 Hz to 100 MHz. More preferably, the vibration frequency of the vibration unit 120 is equal to or higher than 17 kHz, which is higher than the audible range.

27πaf·cos(θ+α) represents the speed at which the vibration unit 120 oscillates the cutting tool 110 in a direction orthogonal to the rake face. v·cosα represents the component of the average cutting speed v in the direction orthogonal to the rake face. Under this machining condition, fine recesses and protrusions are formed on the surface of the workpiece WP1 through use of the vibrating cutting tool 110.

Notably, the angle θ may be larger than 90°. In the case where the angle θ is greater than the clearance angle ξ, the inclined surface to which the rake face has been transferred as a result of the previous vibration may be distorted. However, the amount of plastic deformation is very small. Therefore, the angle θ may be greater than 90° and may be increased to 120°.

Also, preferably, the following expression is satisfied.

$$3v \cdot \cos\alpha \ < \ 2\pi af \cdot \cos(\theta+\alpha) \qquad (3)$$

More preferably, the following expression is satisfied.

$$10v \cdot \cos\alpha \ < \ 2\pi af \cdot \cos(\theta+\alpha) \qquad (4)$$

This is because it is considered that when the value of the right-hand side of the expression (1) is sufficiently large as compared with the value of the left-hand side thereof, the rake face of the cutting tool 110 is properly transferred to the surface of the workpiece WP1.

FIG. 3 is a view showing the surface of the workpiece WP1 when the expression (1) is satisfied sufficiently. In this case, at some moments, the micromachining apparatus 100 pulls the cutting tool 110 at a sufficiently high speed. Therefore, the cutting tool 110 separates from the workpiece WP1 temporarily. Therefore, in the case where the expression (1) is satisfied sufficiently, intermittent cutting is performed. In this case, at least a portion of the surface to which the rake face has been transferred remains on the workpiece WP1. Further, in the case where the value of the right-hand side of the expression (1) is sufficiently large as compared with the value of the left-hand side thereof, the surface having an angle equal to the rake angle reaches to each of crest portions WP1a of protrusions. Therefore, as shown in FIG. 3, recesses and protrusions can be formed on the workpiece WP1 such that the protrusions has sharp crest portions WP1a.

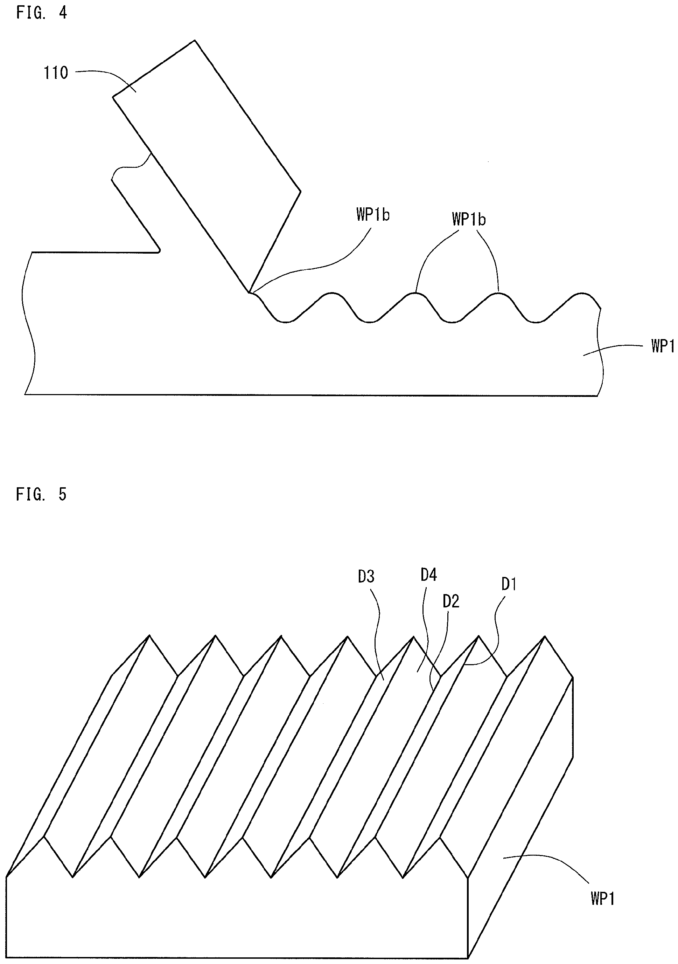

FIG. 4 is a view showing the surface of the workpiece WP1 when the expression (1) is not satisfied. In this case, the speed at which the micromachining apparatus 100 pulls the cutting tool 110 is not sufficiently large. Therefore, the cutting tool 110 continuously cuts the workpiece WP1 without separating therefrom. As a result, as shown in FIG. 4, the rake face is not transferred to the protrusions and recesses of the workpiece WP1, and only the moving locus of the tool cutting edge is transferred thereto. As a result, the workpiece WP1 has rounded crest portions WP1b. In this case, the tip end of the cutting tool 110 continuously comes into contact with the fresh surface of the workpiece WP1 which has been just produced and is active. For example, in the case where the cutting tool 110 is a diamond cutter and the workpiece WP1 is formed of an iron-based material, carbon atoms diffuse into the active fresh surface as a result of formation of solid solution. Accordingly, the cutting tool 110 is likely to wear quickly.

3. Machined workpiece

FIG. 5 is a view schematically showing the surface of the workpiece WP1 after being machined by the micromachining apparatus 100. The surface of the machined workpiece WP1 has crest portions D1, grooves D2, sloping surfaces D3, and sloping surfaces D4. Each crest portion D1 is formed to have a stripe shape. Each crest portion D1 has a shape similar to a mountain ridge. Each crest portion D1 is sandwiched between a sloping surface D3 and a sloping surface D4 adjacent thereto. Each groove D2 has the shape of a single groove. Each groove D2 is sandwiched between a sloping surface D3 and a sloping surface D4 adjacent thereto.

The crest portions D1 and the grooves D2 are formed periodically. The depth of the grooves D2 is about 0.1 $\mu$m to 0.5 $\mu$m. The pitch $\lambda$ of the grooves D2 is about 0.1 $\mu$m to 0.5 $\mu$m. As shown in the expression (2), the value of the pitch $\lambda$ can be set by adjusting the frequency f of the ultrasonic vibration and the average cutting speed v. Further, the depth of the grooves D2 can be set by adjusting the rake angle $\alpha$, the angle $\theta$, and the half amplitude a of the ultrasonic vibration.

4. Effects of the present embodiment

As shown in FIG. 5, the micromachining apparatus 100 of the present embodiment forms the periodic and fine grooves D2 on the surface of the workpiece WP1. As a result, the surface of the workpiece WP1 exhibits hydrophilicity or water repellency. The surface of the workpiece WP1 exhibits hydrophilicity or water repellency depending on the material of the workpiece WP1 and the shape and dimensions of the surface thereof. In the case where the grooves D2 are formed on a hydrophilic material, the surface of the material tends to exhibit a greater degree of hydrophilicity. In the case where the grooves D2 are formed on a water repellent material, the surface of the material tends to exhibit a greater degree of water repellency. Also, in the case where the workpiece WP1 is a lens or the like, the lens has an anti-reflection function. Also, the surface of a sliding member such as a bearing may be machined.

The micromachining apparatus 100 of the present embodiment can form crest portions D1 and grooves D2 whose lengths are approximately equal to the width of the cutting tool 110 by one-path machining. One crest portion D1 and one groove D2 are formed during one cycle of vibration of the cutting tool 110. Therefore, the machining efficiency of the micromachining apparatus 100 is sufficiently high. In particular, when the width of the cutting tool 110 is increased, the machining efficiency increases accordingly. As described above, the micromachining apparatus 100 can perform efficient and accurate micromachining for the surface of the workpiece WP1. In the case where the width of the workpiece WP1 is greater than the width of the cutting tool 110, the above-mentioned micromachining is performed along a plurality of machining paths.

5. Modifications

5-1. Machining in two directions

FIG. 5 is a view showing the surface of the workpiece WP1 machined in one direction by the cutting tool 110. However, the surface of the workpiece WP1 may be machined in two or more directions without changing the depth of cut. For example, when the surface of the workpiece WP1 is machined in two directions, rectangular pyramidal protrusions each having a rectangular bottom surface can be formed on the surface of the workpiece WP1. For example, when the surface of the workpiece WP1 is machined in three directions, triangular pyramidal protrusions can be formed on the surface of the workpiece WP1.

5-2. Concave-convex shape of cutting tool

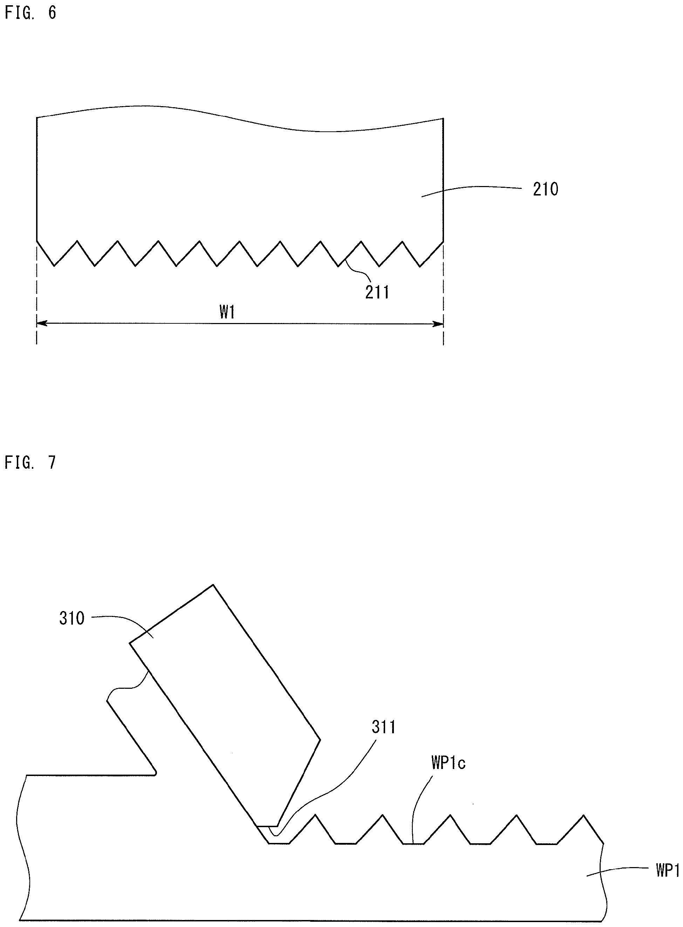

A cutting tool 210 as shown in FIG. 6 may be used. A concave-convex portion 211 is formed at the distal end of the cutting tool 210. The concave-convex portion 211 is formed to extend in the direction of the width W1 of the cutting tool 210. Therefore, when the surface of the workpiece WP1 is machined in one direction by using the cutting tool 210, a plurality of recesses, the number of which corresponds to the number of the convex portions of the concave-convex portion 211, are formed on the surface of the workpiece WP1. Needless to say, micromachining by vibration of the vibration unit 120 is simultaneously performed on the surface of the workpiece WP1.

As shown in FIG. 7, a cutting tool 310 having a very small flat surface 311 may be used. The very small flat surface 311 is formed at the distal end of the cutting tool 310. When this cutting tool 310 is used, a microstructure having bottoms surfaces WP1c and convex portions is transferred to the surface of the workpiece WP1. During machining, the flat surface 311 of the cutting tool 310 presses the workpiece WP1 in its contract region without removing the workpiece WP1 by producing chips. Therefore, the machining force acting on the workpiece WP1 increases slightly. However, since the width of the flat surface 311 of the cutting tool 310 is very small, a portion of the workpiece WP1 with which the cutting tool 310 comes into contact (which portion corresponds to the bottom surface WP1c) plastically deforms without any problem.

5-3. Machining of curved surface

In the present embodiment, the surface of the workpiece WP1 is flat. However, even when the workpiece WP1 has a curved surface, fine recesses and protrusions can be formed on the curved surface through micromachining. For example, the table 130 may be moved to depict a curved surface.

5-4. Finishing

The micromachining apparatus 100 of the present embodiment can perform a finishing process of removing a surface layer of the workpiece WP1 simultaneously with formation of fine recesses and protrusions on the surface of the workpiece WP1. Even when the workpiece WP1 has a somewhat rough surface formed as a result of cutting or grinding, through use of the machining method of the present embodiment, the surface of the workpiece WP1 can be finished into a mirror surface or a rainbow-colored surface.

5-5. First direction

In the present embodiment, when the first direction K1 is projected onto the x-y plane, the first direction K1 projected onto the x-y plane is parallel to the x-axis direction (the average cutting direction J1). However, the first direction K1 projected onto the x-y plane may be inclined at a predetermined angle $\delta$ with respect to the x-axis direction. However, a deeper concave-convex shape can be formed when the angle $\delta$ is 0° as in the embodiment. Notably, in the case where the angle $\delta$ is not 0°, the angle $\theta$ may be defined by using the first direction K1 projected onto the x-z plane.

5-6. Direction of cutting edge width

The present embodiment has been described under the assumption that, when the direction of the cutting edge width of the cutting tool 110 is projected onto the x-y plane, the direction of the cutting edge width of the cutting tool 110 projected onto the x-y plane is parallel to the y-axis direction. However, the direction of the cutting edge width of the cutting tool 110 may be set not to be parallel to the y-axis direction. Namely, when the direction of the cutting edge width of the cutting tool 110 is projected onto the x-y plane, the direction of the cutting edge width of the cutting tool 110 projected onto the x-y plane may form a predetermined angle $\gamma$ with respect to the y axis. In such a case, the pitch of the grooves formed on the workpiece WP1 is represented by $\lambda\cos\gamma$.

5-7. Attachment of cutting tool

In FIG. 1, the cutting tool 110 is attached to the vibration unit 120 at a predetermined angle. However, it is preferred that the angle of the cutting tool 110 with respect to the vibration unit 120 can be changed freely in accordance with the shapes of recesses and protrusions to be formed. Preferably, the micromachining apparatus 100 has a connection portion which allows an operator to freely change the angle of attachment of the cutting tool 110 to the vibration unit 120. When the attachment angle of the cutting tool 110 is changed, the rake angle changes.

5-8. Other modifications

The above-described modifications may be combined freely.

6. Summary of present embodiment

The micromachining apparatus 100 of the present embodiment has the cutting tool 110 and the vibration unit 120. Since the vibration unit 120 oscillates periodically, the cutting tool 110 can perform micromachining on the surface of the workpiece WP1. Also, as shown in the expression (2), when an vibration unit 120 having a high vibration frequency is used, the average cutting speed v which is sufficiently large in relation to the pitch $\lambda$ of recesses and protrusions can be set.

(Second embodiment)

A second embodiment will be described. The workpiece of the second embodiment is a die.

1. Die manufacturing method

1-1. Die part forming process

First, a die part is formed. For such a purpose, a machining apparatus such as a machining center or an ultra-precision machining apparatus is used.

1-2. Micromachining process

Next, micromachining is performed on the inner side of the die part through use of the micromachining apparatus 100. The specific conditions of the machining are the same as those having already been described in the first embodiment. Namely, fine recesses and protrusions are formed on the surface of the die by using the vibrating cutting tool 110 under the machining conditions having been described in the first embodiment.

1-3. Other processes

Also, a member on which the shapes of recesses and protrusions formed by micromachining are transferred by electroforming or the like process may be used as a die. A heat treatment process of thermally treating the die part or the like process may be performed as needed. Also, a polishing process of polishing the die part may be performed. Also, other processes may be performed.

2. Modification

2-1. Concave-convex shape of cutting tool

As shown in FIG. 7, a cutting tool 310 having a flat surface 311 at its distal end may be used. In this case, a flat bottom surface WP1c is formed in each of fine grooves of the die. The bottom surfaces WP1c of the die are used to form convex portions, through transfer, on a product molded through use of the die. Since the bottom surfaces WP1c are formed on the die, the crest portions of the convex portions of the product are flat to some degree. Therefore, the surface of the product is less likely to be damaged. Also, a cutting tool which has a rounded surface in place of the flat surface 311 may be used. In such a case, the convex portions of the molded product have rounded crest portions. Accordingly, the surface of the product is less likely to be damaged.

2-2. Other modifications

The second embodiment and its modifications and the first embodiment and its modifications may be combined freely.

EXAMPLE

1. Setup of apparatus

The angle θ formed between the first direction K1 and the average cutting direction J1 was set to 45°. The cutting tool 110 was a diamond cutter. The vibration frequency of the vibration unit 120 was 35 kHz, and the total amplitude was about 5 μm. The feed speed (cutting speed) was 1 m/min.

2. Other machining conditions

The workpiece WP1 was formed of a copper alloy. The pitch was about 0.5 μm.

3. Results

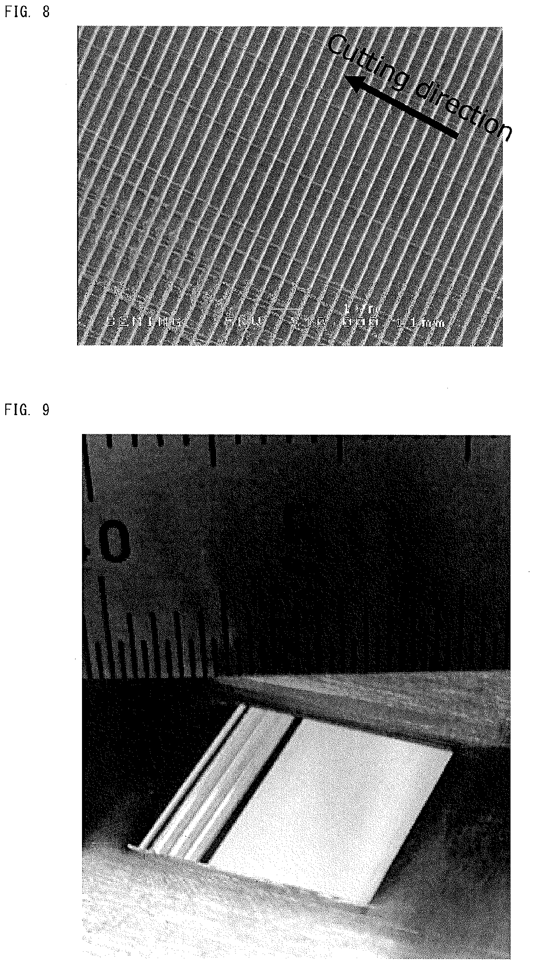

FIG. 8 is a photomicrograph of the surface of the workpiece WP1. As shown in FIG. 8, periodic recesses and protrusions are formed on the surface of the workpiece WP1.
FIG. 9 is a photograph showing the surface of the workpiece WP1. As shown in FIG. 9, when the workpiece WP1 is viewed from a proper angle, the surface has a rainbow-colored luster. Alternatively, the surface of the workpiece WP1 may be a mirror-finished surface.

DESCRIPTION OF REFERENCE NUMERALS AND SYMBOL

100:    micromachining apparatus
110:    cutting tool
120:    vibration unit
130:    table
WP1:    workpiece

**Claims**

1. A micromachining method **characterized by** use of a machining apparatus comprising a cutting tool and an ultrasonic vibration unit for vibrating the cutting tool in a first direction, wherein an angle formed between an average cutting direction of the cutting tool and the first direction is set to fall within a range of 20° to 120°, and recesses and protrusions are formed on a surface of a workpiece as a result of machining by the cutting tool which is vibrating.

2. A micromachining method according to claim 1, wherein the angle formed between the average cutting direction of the cutting tool and the first direction is set to fall within a range of 35° to 85°.

3. A micromachining method according to claim 1 or 2, wherein an average cutting speed of the cutting tool satisfies the following expressions:

$$v \cdot \cos\alpha \ < \ 2\pi af \cdot \cos(\theta + \alpha)$$

$$\lambda \ = \ v/f$$

where

v : the average cutting speed,
a : the half amplitude of ultrasonic vibration,
f : the frequency of ultrasonic vibration,
θ : the angle formed between the average cutting direction of the cutting tool and the first direction,
α : the rake angle as viewed in a plane including the average cutting direction of the cutting tool and the first direction (the sign of the rake angle being determined such that when the rake angle is positive, the cutting edge of the cutting tool is sharp, and when the rake angle is negative, the cutting edge is dull), and
λ : the pitch of the recesses and protrusions.

4. A die manufacturing method **characterized by** use of a machining apparatus comprising a cutting tool and an ultrasonic vibration unit for vibrating the cutting tool in a first direction, wherein an angle formed between an average cutting direction of the cutting tool and the first direction is set to fall within a range of 20° to 120°, and recesses and protrusions are formed on a surface of a die as a result of machining by the cutting tool which is vibrating.

5. A die manufacturing method according to claim 4, wherein the angle formed between the average cutting direction of the cutting tool and the first direction is set to fall within a range of 35° to 85°.

6. A die manufacturing method according to claim 4 or 5, wherein an average cutting speed of the cutting tool satisfies the following expressions:

$$v \cdot \cos\alpha \; < \; 2\pi af \cdot \cos(\theta+\alpha)$$

$$\lambda \; = \; v/f$$

where

v : the average cutting speed,
a : the half amplitude of ultrasonic vibration,
f : the frequency of ultrasonic vibration,
θ : the angle formed between the average cutting direction of the cutting tool and the first direction,
α : the rake angle as viewed in a plane including the average cutting direction of the cutting tool and the first direction (the sign of the rake angle being determined such that when the rake angle is positive, the cutting edge of the cutting tool is sharp, and when the rake angle is negative, the cutting edge is dull), and
λ : the pitch of the recesses and protrusions.

7. A micromachining apparatus comprising a cutting tool and an ultrasonic vibration unit for vibrating the cutting tool in a first direction, **characterized in that** an angle formed between an average cutting direction of the cutting tool and the first direction falls within a range of 20° to 120°.

FIG. 1

FIG. 2

FIG. 3

FIG. 4

FIG. 5

FIG. 6

210

211

W1

FIG. 7

310

311

WP1c

WP1

FIG. 8

FIG. 9

**EP 3 466 572 A1**

<table>
<tr><td colspan="2" align="center"><strong>INTERNATIONAL SEARCH REPORT</strong></td><td colspan="2">International application No.<br>PCT/JP2017/020509</td></tr>
</table>

**A. CLASSIFICATION OF SUBJECT MATTER**
*B23B1/00*(2006.01)i, *B29C33/38*(2006.01)i

According to International Patent Classification (IPC) or to both national classification and IPC

**B. FIELDS SEARCHED**

Minimum documentation searched (classification system followed by classification symbols)
B23B1/00, B29C33/38

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 58-143901 A  (Jun'ichiro KUMABE),<br>26 August 1983 (26.08.1983),<br>page 1, right column, line 4 to page 4, lower<br>left column, line 20; fig. 3 to 9<br>(Family: none) | 1-3,7<br>4-6 |
| Y | JP 2009-255275 A  (Panasonic Corp.),<br>05 November 2009 (05.11.2009),<br>paragraph [0024]<br>& US 2009/0240367 A1<br>paragraph [0040]<br>& EP 2103376 A1<br>paragraph [0030] | 4-6 |

☒  Further documents are listed in the continuation of Box C.          ☐  See patent family annex.

| | |
|---|---|
| *   Special categories of cited documents: | "T"  later document published after the international filing date or priority date and not in conflict with the application but cited to understand the principle or theory underlying the invention |
| "A"  document defining the general state of the art which is not considered    to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search<br>09 August 2017 (09.08.17) | Date of mailing of the international search report<br>22 August 2017 (22.08.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/020509

C (Continuation).   DOCUMENTS CONSIDERED TO BE RELEVANT

| Category* | Citation of document, with indication, where appropriate, of the relevant passages | Relevant to claim No. |
|---|---|---|
| A | JP 47-28267 A  (Nippon Gakki Co., Ltd.), 26 July 1972 (26.07.1972), entire text; all drawings (Family: none) | 1,7 |
| A | JP 2005-46943 A  (Techno Dai-Ichi Co., Ltd.), 24 February 2005 (24.02.2005), entire text; all drawings & CN 1579688 A | 1,7 |

Form PCT/ISA/210 (continuation of second sheet) (January 2015)

**EP 3 466 572 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008143162 A